# EUROPEAN PATENT APPLICATION

(11) **EP 1 168 669 A2**
(43) Date of publication of application: **02.01.2002**
(21) Application number: 01113509.2
(22) Date of filing: 11.06.2001
(51) Int. Cl.: H04B 7/185

(54) **Beam hopping self addressed packet switched communication system with multi-port shared memory**

(30) Priority: 21.06.2000 US 599035
(71) Applicant: TRW Inc., Redondo Beach, California 90278 (US)
(72) Inventor: Linsky, Stuart T., San Pedro, CA90732 (US); Moy-Yee, Lisa A., Torrance, CA90505 (US); Cooper, Scott A., Torrance, CA 90505 (US); Jue, Reginald, Manhattan Beach, CA90266 (US); Nguyen, Andrew T., Orange, CA92868 (US); Yee-Madera, Gefferie H., San Gabriel, CA91776 (US); Bera, Tuhina R., Irvine, CA 92614 (US)
(74) Representative: Schmidt, Steffen J., Dipl.-Ing.

(57) **Abstract**

A router (600) for a communication satellite includes a multiport shared memory (804) with storage for at least two downlink hop location queues, a packet switch (608) that routes self addressed uplink data from an input port to an output port coupled to the multiport shared memory (804), and a routing table (702) coupled to the packet switch (608). The routing table (702) stores queue tags (714) that identify at least one of the downlink hop location queues in which the uplink data should be stored. In addition, the routing table stores routing tags (712) the direct the packet switch (608) to route the uplink data from one of its input ports to one or more of its output ports.

## Description

### BACKGROUND OF THE INVENTION

The present invention relates to satellite communication systems. In particular, the present invention relates to a satellite communication system including a self addressed packet switch that stores data downlink hop location queues in a multiport shared memory and that hops a downlink beam between terrestrial cells.

Satellites have long been used to provide communication capabilities on a global scale. For this purpose, a satellite includes multiple uplink and downlink antennas, each of which provides communication bandwidth to a large service region using multiple spot beams. The area covered by a spot beam is commonly referred to as a cell, and color coded spot beams are assigned in a pattern called a laydown to cover the service region.

Each spot beam provides limited bandwidth. Yet, as a satellite provides additional simultaneous spot beams, the cost, complexity, and power requirements of the satellite increase. Thus, the ability to provide service to a laydown with a large number of cells was limited by prior satellite and antenna design and cost considerations.

Furthermore, prior satellite designs typically operated on a circuit switched basis that directed downlink traffic to cells according to a fixed switching schedule internal to the satellite. With the increasing adoption of terrestrial communication systems that carry data containing its own destination address, has come the need to route such data through a satellite link. Circuit switched satellites, however, were generally too inflexible to route such data, not only in terms of their antenna structure, but also in terms of their memory management capabilities, and downlink data scheduling techniques.

A need has long existed in the industry for a communication system that addresses the problems noted above and others previously experienced.

### BRIEF SUMMARY OF THE INVENTION

A preferred embodiment of the present invention provides a router for a communication satellite. The router includes a multiport shared memory with storage for at least two downlink hop location queues, a packet switch that routes self addressed uplink data from an input port to an output port coupled to the multiport shared memory, and a routing table (e.g., in an inbound module) coupled to the packet switch.

The routing table stores queue tags that identify at least one of the downlink hop location queues in which the uplink data should be stored. In addition, the routing table stores routing tags the direct the packet switch to route the uplink data from one of its input ports to one or more of its output ports. The routing table may also store replacement address information for the uplink data (e.g., replacement VPI / VCI addresses for ATM cells indicative of the next hop, or destination).

As an example, the downlink hop location queues may be distinguished by priority, code rate, and hop location. In particular, there may be 16 hop locations, 2 codes rates, and 16 priorities (i.e., 512 different possible queues).

The downlink hop location queues may be fixed in size, dynamically sized (by allocating or deallocating memory from the shared memory), or a combination of the two. In addition, any of the downlink hop location queues may be characterized by a minimum guaranteed size, a maximum size, and/or a data priority threshold (that determines when low priority data is rejected). A dedicated controller queue may be provided in the shared memory (e.g., the hop location 15, light code rate, priority 15 queue).

### BRIEF DESCRIPTION OF THE DRAWINGS

Figure 1 illustrates a block diagram of a bandwidth switch with waveform processing chain.
Figure 2 shows a detailed block diagram of a bandwidth switch with waveform processing chain.
Figures 3 illustrates a beam laydown showing both even and odd hop downlink beam color assignments.
Figure 4 shows the even hop downlink beams from the beam laydown of Figure 3.
Figure 5 depicts the odd hop downlink beams from the beam laydown of Figure 3.
Figure 6 shows an implementation of a router.
Figure 7 shows an implementation of an inbound module.
Figure 8 illustrates an implementation of an outbound module.
Figure 9 shows a cell discard algorithm for fixed partition buffers.
Figure 10 shows a cell discard algorithm for dynamically buffered queues.
Figure 11 illustrates a method for routing data through a satellite to a selected downlink hop location.

### DETAILED DESCRIPTION OF THE INVENTION

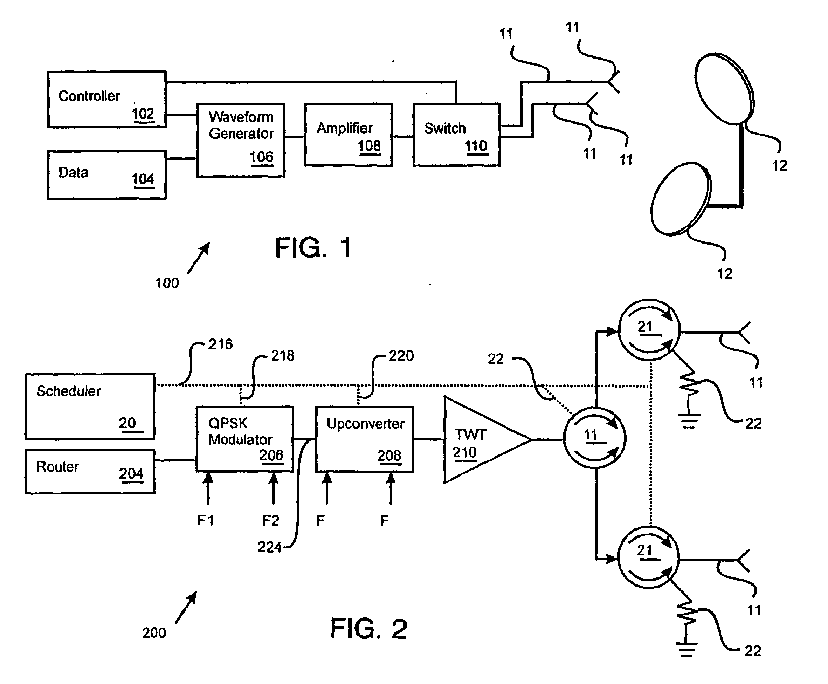

Turning now to Figure 1, that figure shows a block diagram of a downlink beam processing system or bandwidth switch 100. The bandwidth switch 100 includes a controller 102 and a waveform processing chain that operates on data provided by the data source 104. In particular, the waveform processing chain includes a waveform generator 106, an amplifier 108, and a feed switch 110. The waveform processing chain further includes a first feed path 112 and a second feed path 114 that may be characterized by a polarization effect on the waveform that propagates along the feed paths 112-114. The polarization effect may induce, for example, clockwise (right) or counter clockwise (left) polarization in the waveform.

The first feed path 112 terminates in a first radiating element 116 (e.g., a feed horn). Similarly, the second feed path terminates in a second radiating element 118 (e.g., another feed horn). The first and second feed horns 116, 118 illuminate the subreflector 120. The subreflector 120, in turn, illuminates the main reflector 122 that projects downlink beams onto terrestrial cells. Thus, the first and second feed horns 116, 118, the subreflector 120, and the main reflector 122 form a Multiple Beam Array Antenna (MBA) to direct spot beam coverage to distinct terrestrial cells. Additional feed horns may be used with the MBA to generate additional spot beams, and multiple independent MBAs may be provided.

The waveform generator 106 accepts baseband data from the data source 104 and creates a waveform to be transmitted (after amplification by the amplifier 108). The switch 110 selects the particular feed path 112-114 along which the waveform propagates (and thus, in certain embodiments, the polarization and/or hop location associated with the waveform).

The controller 102 exercises color control over the waveform to be transmitted. Thus, the controller 102 may output one or more control signals (collectively referred to as a color selection signal) that determine, for example, the frequency, polarization, or hop location of the waveform to be transmitted. In the preferred embodiment, the beam color components include Even and Odd hop locations, Left and Right polarization, and first and second frequencies. Eight different colors are therefore available: 1EL, 1ER, 10L, 10R, 2EL, 2ER, 20L, 20R.

With regard to Figure 2, a more specific implementation of a bandwidth switch 200 is shown. The bandwidth switch 200 includes a data scheduler 202, a data router 204, and a waveform processing chain including a QPSK modulator 206, an upconverter 208, and a traveling wave tube amplifier (TWTA) 210. The switch 110 is illustrated in Figure 2 as a ferrite switch 110 that directs the waveform to be transmitted through either the first feed path 112 or the second feed path 114. Preferably, additional ferrite switches 212 and 214 in the feed paths 112-114 provide additional signal isolation (e.g., approximately 20db between input and output when the ferrite switch is off). The additional ferrite switches 212-214 operate under control of the color selection output to pass or block a waveform to be transmitted through the feed paths 112-114. In other words, when the waveform to be transmitted is destined for the feed 112, then the ferrite switch 214 is coupled through the load 228 to ground. Similarly, when the waveform to be transmitted is destined for the feed 114, then the ferrite switch 212 is coupled through the load 226 to ground.

In addition, Figure 2 shows a color selection output 216, two frequency selection inputs 218 and 220, a feed path selection input 222, and an intermediate waveform output 224.

During operation, the bandwidth switch 200 accepts baseband data from the router 204 (e.g., an ATM cell router), and creates a waveform to be transmitted using the waveform processing chain. The waveform processing starts by directly converting baseband I and Q data to an intermediate frequency of, for example, 750 MHz. The waveform processing then selects one of F1 (e.g., 3.175 MHz) and F2 (e.g., 3.425) and one of F3 (e.g., 16 GHz) and F4 (e.g., 17.4 GHz) to produce a waveform to be transmitted with a final center frequency at one of 18.425 GHz, 18.675 GHz, 19.825 GHz, and 20.075 GHz. The scheduler 204 monitors the propagation of data through the waveform processing chain and determines the color of the waveform to be transmitted. To that end, the scheduler 204 provides the color selection output 216 that indicates, as examples, the frequency, polarization, and hop location for the waveform to be transmitted.

The TWTA 210 amplifies the waveform to be transmitted, while the switch 110 determines along which feed path 112-114 (or additional feed paths) the amplified waveform will propagate. To that end, the switch 110 includes the feed path selection input 222 responsive to information on the color selection output 216 (e.g., a hop selection signal). Because the feed paths 112-114 are generally (though not necessarily) associated with feed horns that produce spot beams in different hop locations, the hop selection signal acts to determine the hop location of the waveform to be transmitted. The hop locations below are designated Even or Odd, but are not restricted to even or odd frames. Instead Even and Odd generally designate mutually exclusive time periods.

In addition, either of the feed paths 112-114 may be characterized by a polarization effect on the waveform that propagates along the feed path. Thus, the color selection output 216 may also determine the polarization color component of the waveform to be transmitted. Optionally, however, separate feed paths may be provided for any number of desired combinations of polarization and hop location. The transmitted waveform manifests itself as a beam spot that, typically, provides downlink bandwidth for a terrestrial cell.

The bandwidth switch 200 may operate onboard a first satellite that supports a cellular coverage area using a set of spot beams. The scheduler 202 ensures that the waveforms to be transmitted have the appropriate beam colors to minimize co-channel, adjacent channel, and cross polarization for the cellular coverage area and the eight possible beam colors. However, when, for example, a second subsequently launched satellite begins to provide bandwidth support for the same cellular coverage area, the bandwidth switch 200 allows the first satellite to modify its beam colors to accommodate the second satellite. In other words, the bandwidth switch 200 allows the first and second assignment of spot beams to the coverage area to coexist in a minimally interfering manner. The resultant beam laydown may then be minimally interfering initially for a single satellite, and later reconfigured to be minimally interfering with regard to a particular type of interference or interferences for additional satellites providing bandwidth for the same coverage area.

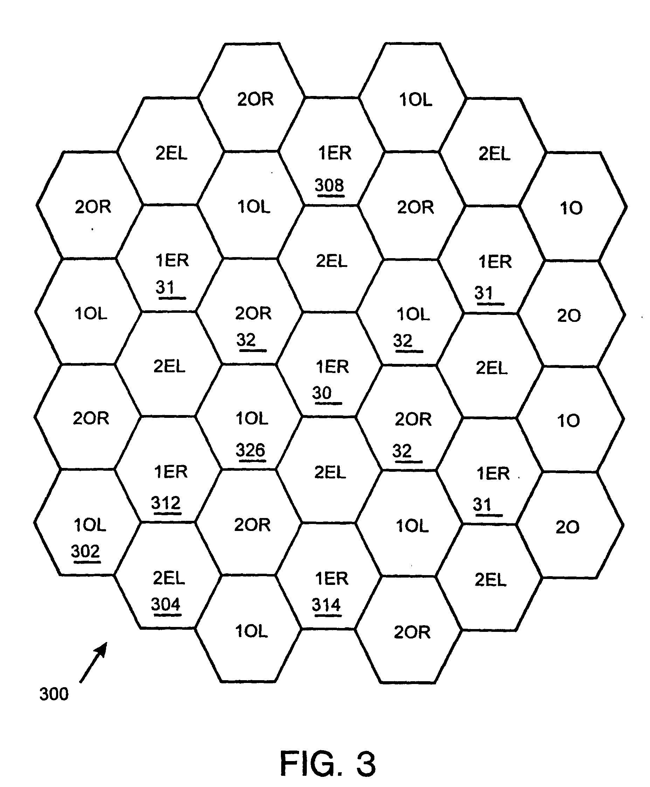

Turning next to Figure 3, that figure illustrates a beam laydown 300 that uses hopping beams. The coverage area is generally divided into cells as shown in idealized form, for example, by the hexagonal cells 302 and 304. Each of the cells is also labeled with a beam color. For example, a beam of color 1OL provides bandwidth for the cell 302, while a beam of color 2EL provides bandwidth for the cell 304.

The laydown 300 is characterized in that, for mutually exclusive hop locations, a only six cochannel interferers (CCI) (caused by a beam of the same color), zero adjacent channel interferers (ACI) (caused by a beam differing in only one color component), and zero cross polarization interferers (XPI) (caused by a beam differing only in polarization) exist for any given cell. In other words, taking cell 306 (color 1ER) as an example, the CCIs are cells 308, 310, 312, 314, 316, and 318.

Note that cell 320 does not provide CCI because it has an odd color component and is not provided with spot beam energy at the same time as the cell 306 (color 1ER) (i.e., the hop locations are mutually exclusive). The laydown 300 also provides minimal interference when hop locations are non-mutually exclusive. In the non-mutually exclusive case, there exist only 6 CCIs, 2 ACIs, and 2 XPIs. The ACIs are cells 322 and 324, while the XPIs are cells 320 and 326. Note that not all colors (e.g., 20L) need be used in a beam hopping beam laydown.

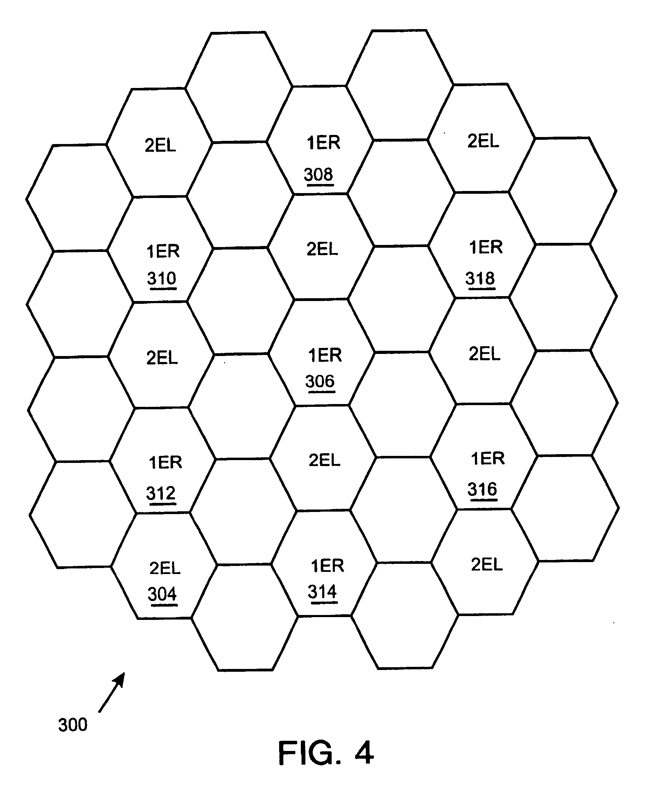

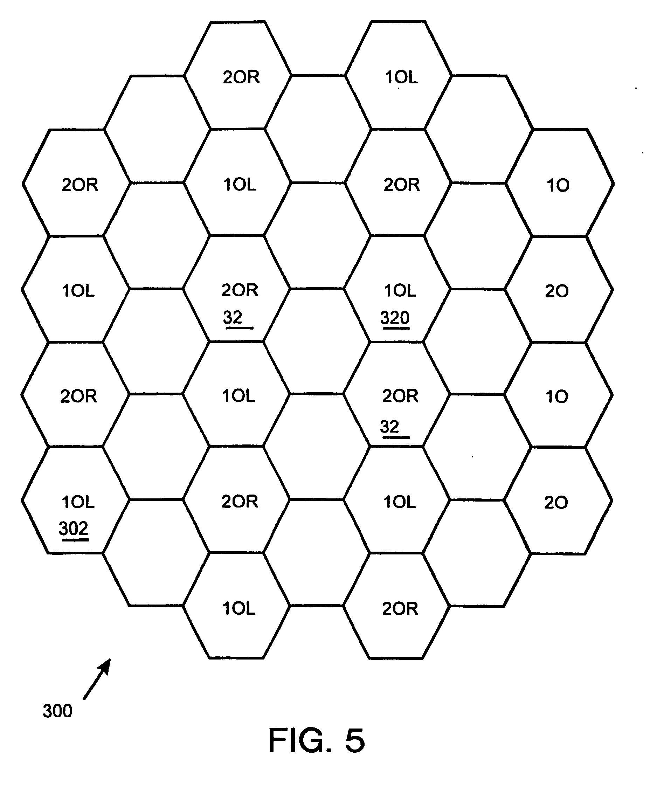

Figure 4 shows the laydown 300 as well. In Figure 4, however, only the even hop locations are marked. Similarly, Figure 5 shows the beam laydown 300 with only the odd hop locations marked.

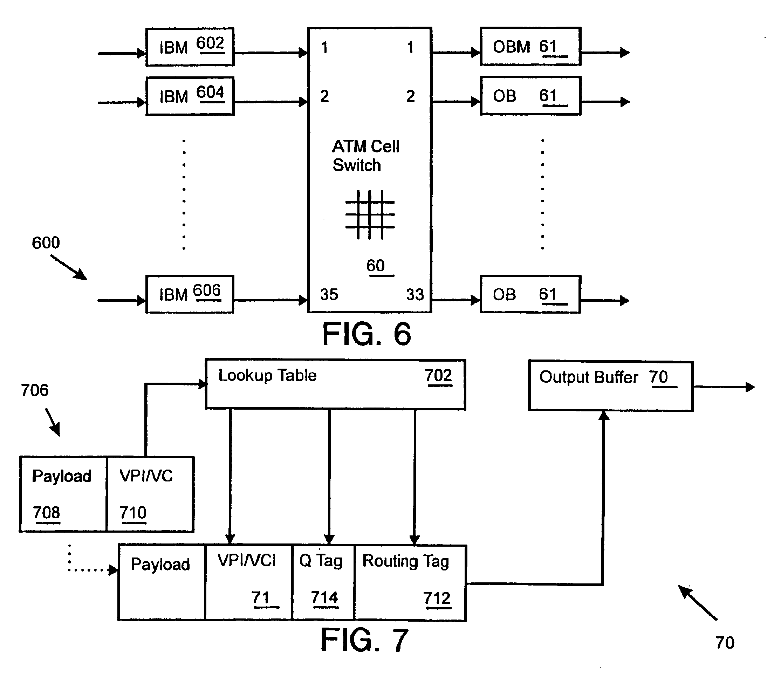

Turning next to Figure 6, a preferred implementation of a router 600 is illustrated. The router 600 includes thirty-five inbound modules (IBMs), three of which are designated 602, 604, 606. The IBMs 602-606 are coupled to input ports of an ATM cell switch 608. The ATM cell switch 608 has thirty-three outputs coupled to individual outbound modules (OBMs), three of which are designated 610, 612, 614. Paris of uplink demodulators feed each IBM 602-606, while the OBMs 610-614 feed downlink modulators.

The router 600 provides a self addressed packet switching function. In other words, the router 600 uses addressing or destination information present in uplink data (e.g., ATM cells) to deliver the cells to a specific data queue that feeds a downlink beam appropriate for the destination or next hop of the cell. Thus, for example, the VPI / VCI fields in an ATM cell may be used to guide the cell into an appropriate downlink queue. Cells may first be discarded however, if they fail their header error check.

The output of the IBMs 602-606 includes a routing tag, a queue tag, and the (possibly modified) cell itself. The role of the IBMs 602-606, the routing tag and, the queue tag will be described in more detail below with respect to Figure 7. In general, the ATM cell switch 608 uses the bits in the routing tag to connect a cell switch input port to a cell switch output port. The queue tag, a portion of the routing tag, and the cell itself then flow through the switch to the OBM connected to the selected output port. As will be described in more detail below, each OBM 610-614 includes a set of downlink queues that feed downlink beams directed to predetermined terrestrial cells. The queue tag determines in which downlink queue the cell will be inserted in the OBM (and may be indicative of cell priority and downlink coding rate). Thus, the IBMs 602-606, the ATM cell switch 608, and the OBMs 610-614 operate in concert to deliver cells to an appropriate downlink queue in a self addressed manner.

Figure 7 illustrates an implementation 700 of the IBMs 602-606. In particular, the implementation 700 includes a routing or lookup table 702 and an output buffer 704. An incoming ATM cell generally indicated at 706 is shown to include (among other fields) a payload 708 and a VPI/VCI address 710. Figure 7 also illustrates a particular routing tag 712, queue tag 714, and optional replacement VPI/VCI 716 field for the cell from among those stored in the routing table 702. If the cell is modified (e.g., by changing its VPI/VCI), the IBM will also recompute the cell header error check. A ground based Network Control Center (NCC) may dynamically update the routing table 702 to ensure proper routing of cells from the current network node (e.g., the satellite) to the next network node (e.g., a ground terminal).

The VPI/VCI 710 of the cell 706 addresses the routing table 702. In response, the routing table 702 provides the routing tag 712, queue tag 714, and new VPI/VCI addresses 716 (e.g., for the next hop that the cell will make). A NULL entry in the routing table 702 may indicate that the cell is to be discarded. Any modifications to the uplink cell result in the IBM recomputing an error check for the uplink cell as well. This information enters the output buffer 704 (which may be, for example, 8191 cells in length). Once in the output buffer 704, the information awaits selection by an arbitration algorithm before it enters the cell switch 608. As examples, the arbitration algorithm may give preference to the oldest cells (e.g., using a two bit quantization of clock cycle cell age), the remaining capacity of the output buffer 704 (e.g., using a three bit quantization of total input queue size), and the like.

Once the cell is selected, its routing tag is used to send the cell to an associated output port of the cell switch 608. In particular, the routing tag 712 is preferably seven bits in length. The ATM cell switch 608 uses six of the seven bits internally to connect an input port to an output port determined by the six bits. For future expandability, the seventh bit may be used, for example, to support larger switches with additional output ports.

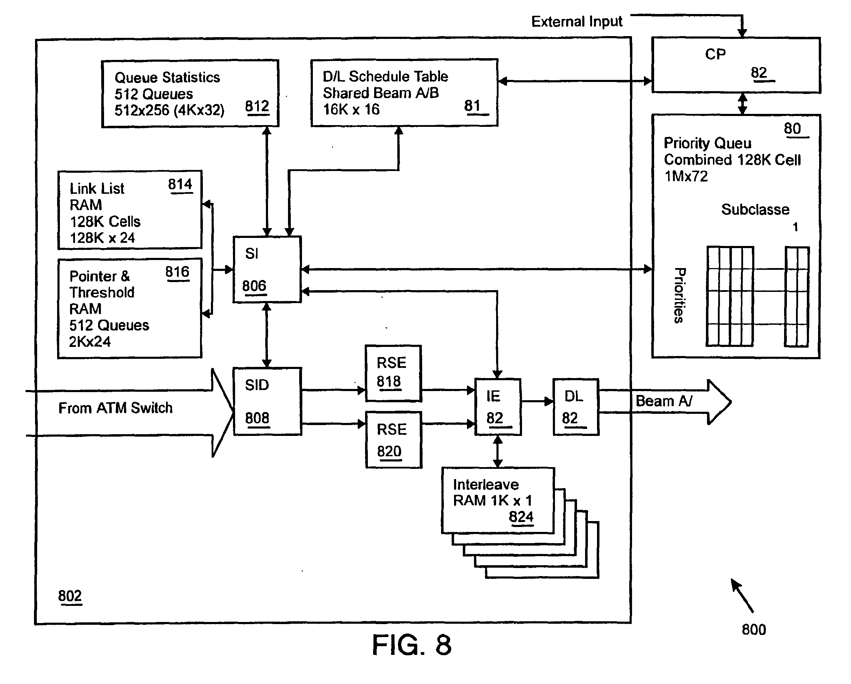

Turning now to Figure 8, that figure illustrates an implementation of an OBM 800. The OBM 800 includes an OBM controller 802 coupled to an external cell memory 804. The OBM controller 802 integrates, preferably, into a single ASIC logic that implements a switch interface controller (SIC) 806 and a switch interface data handler (SID) 808. The SIC 806 couples to a downlink schedule table 810, a queue statistics memory 812, a linked list memory 814, and a pointer memory 816. In addition, the OBM 800 includes a first Reed-Solomon encoder (RSE) 818, a second RSE 820, interface electronics (IEA) 822 coupled to interleaving memory 824, and a downlink frame formatter (DLF) 826.

The external cell memory 804 is preferably organized into numerous queues. The queues may be distinguished by characteristics such as hop location, priority, and code rate, or other criteria. In general, for each hop location, there may be one or more code rates, each having one or more priority queues. In one embodiment, there are 16 downlink hop locations (referred to as a subclass) the external cell memory 804 includes 16 light coding queues and 16 heavy coding queues (i.e., 512 total queues). Each of the 16 light and 16 heavy coding queues represents a predetermined priority. One queue (e.g., priority 15, subclass 15, light coding) may be reserved for system controller traffic. The queue tag determines the subclass and the queue for which a cell is destined. The external cell memory 804 is preferably a multiport memory shared between output ports of the cell switch 608. The multiport nature of the external cell memory 804 resides in its role as shared storage for multiple hop locations (i.e., Beam A and Beam B that share a single physical cell switch 608 output port) served by the single OBM controller 802.

The memory provided by the external cell memory 804 may be allocated in a fixed or dynamic manner in several different ways. As one example, one or more queues may be allocated a fixed amount of memory to meet the expected long term needs of the subclass and priority associated with the queue. The remaining memory may then be shared by the remaining queues. To guarantee a minimum bandwidth for each queue, a minimum threshold amount of memory may be reserved for each queue. Thus, the external cell memory 804 permits pairing destination bandwidth needs for a particular destination at a particular time with allocations of queue memory. To that end, the NCC may dynamically uplink to the satellite changes to the manner in which memory is allocated. The thresholds, maximum queue size, minimum queue size, and the like are stored in the pointer memory 816.

The SIC 806 comprises logic that directs the activities of the OBM controller 802, including obtaining cells from the cell switch 608 through the SID 808. As will be described in more detail below, the SIC 806 makes a determination regarding whether the cell should be accepted or rejected using parameters for each queue stored in the pointer memory 816. If a cell is accepted, the SID 808 stores the cell in a queue in the external cell memory 804. The SIC 806 then updates the linked list memory 814 to record where the cell was stored in the external cell memory 804. The SIC 806 also updates the queue statistics memory 812 to reflect the number of cells in each queue in the external memory 804, the number of cells accepted or rejected for each queue, peak queue occupancies, the number of cells pulled from the each queue for transmission, and the number of threshold failure cells.

The SIC 806 and SID 808 handle retrieval of cells from the external cell memory 804 under in accordance with a schedule stored in the downlink schedule table 810. In particular, the downlink schedule table specifies for each frame parameters such as code selection, power gating, cell selection, and the like.

The structure of the downlink schedule table is described in detail in TRW Docket No. 22-0131, Serial No. , and is incorporated herein be reference in its entirety.

The RSEs 818 and 820 apply a Reed-Solomon block code (e.g., a (236, 212) block code) to cells retrieved for transmission. The IEA 822 subsequently interleaves, scrambles, and convolutionally codes the block coded cells. To that end, for example, the convolutional code may be a 3/4 rate constraint length 7 punctured convolutional code for light coded cells, and a 3/8 rate constraint length 7 punctured convolutional code for heavy coded cells. The DLF 826 then forms, preferably, a two payload downlink frame for the downlink, including overhead information (e.g., synchronization codes, code identifiers, guard time, and the like). Each payload may independently carry 12 heavy coded cells or 24 light coded cells.

Additional details of the frame format, coding, interleaving, and scrambling may be found in TRW Docket No. 22-0125, Serial No. , incorporated herein by reference in its entirety.

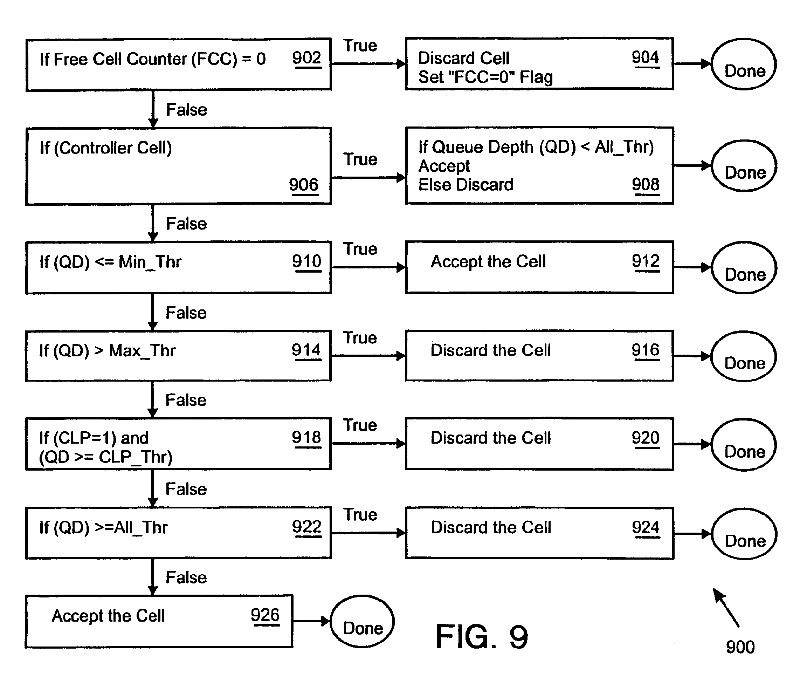

As noted above, the SIC 806 makes a determination regarding whether a cell retrieved from the cell switch 608 should be accepted or rejected using parameters for each queue stored in the pointer memory 816. Turning now to Figure 9, a flow diagram 900 presents a series of determinations made by the SIC 806 when queue are fixed in size. At step 902, the SIC 806 determines whether there is any free memory in which to store the cell. If the free cell counter (FCC) is zero, the cell is discarded (step 904). Otherwise the SIC 806 determines if the cell is a controller cell (step 906). A controller cell, for example, may be a cell that carries command, configuration, or status information from the NCC to the satellite (e.g., to update the routing table 702 or downlink scheduling table). If the cell is a controller cell, and if the associated queue depth (QD) is less than its maximum size (i.e., the All_Thr), then the cell is accepted, otherwise it is discarded (step 908).

Continuing at step 910, if the queue depth is less than or equal to the minimum threshold queue size (Min_Thr) then the cell is accepted (step 912). Step 914 checks to see if the queue depth is greater than the maximum allowed queue size (Max_Thr), and if so the cell is discarded (step 916). Beginning at step 918 the SIC 806 may accept or discard the cell based on the Cell Loss Priority (CLP) field found, for example, in an ATM Cell.

A CLP of zero indicates that the cell is of high priority and should not be dropped during periods of high congestion. A CLP of one indicates that the cell is of low priority and should be dropped, if needed, during periods of high congestion. At step 918, if the cell is low priority, and the queue depth is greater than the cell loss priority threshold (CLP_Thr), then the cell is discarded (step 920). If (step 922) the queue depth is greater than All_Thr, then the cell is discarded (step 924). Otherwise, the cell is accepted (step 926).

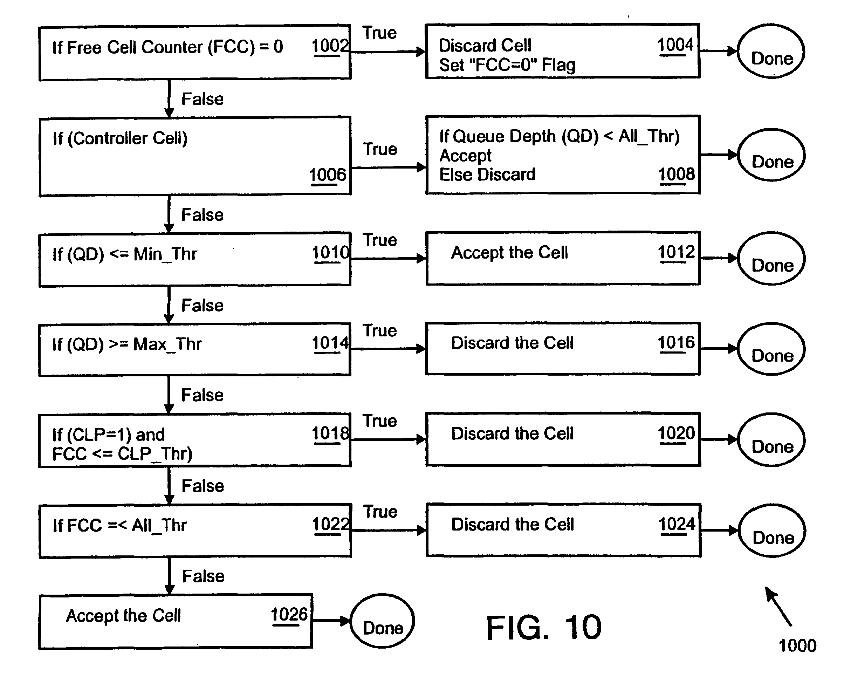

When queues are allocated memory in a dynamic fashion, the SIC 806 follows the steps indicated in Figure 10 to determine whether a cell is to be accepted. In particular, at step 1002, the SIC 806 determines whether there is any free memory available to store the cell. If the free cell counter (FCC) is zero, the cell is discarded (step 1004). Otherwise the SIC 806 determines if the cell is a controller cell (step 1006). If so, if the queue depth (QD) is less than All_Thr, then the cell is accepted, otherwise discarded (step 1008).

Continuing at step 1010, if the queue depth is less than or equal to the minimum threshold queue size (Min_Thr) then the cell is accepted (step 1012). Step 1014 checks to see if the queue depth is greater than the maximum allowed queue size (Max_Thr), and if so the cell is discarded (step 1016). At step 1018 the SIC 806 may accept or discard the cell based on the CLP. If the cell is low priority, and the amount of free memory is less than or equal to the cell loss priority threshold (CLP_Thr), then the cell is discarded (step 1020). If (step 1022) the amount of free memory is less than All_Thr, then the cell is discarded (step 1024). Otherwise, the cell is accepted (step 1026).

The pointer memory 816 stores the thresholds referred to above, including the All_Thr, Min_Thr, Max_Thr, CLP_Thr, and FCC for each queue.

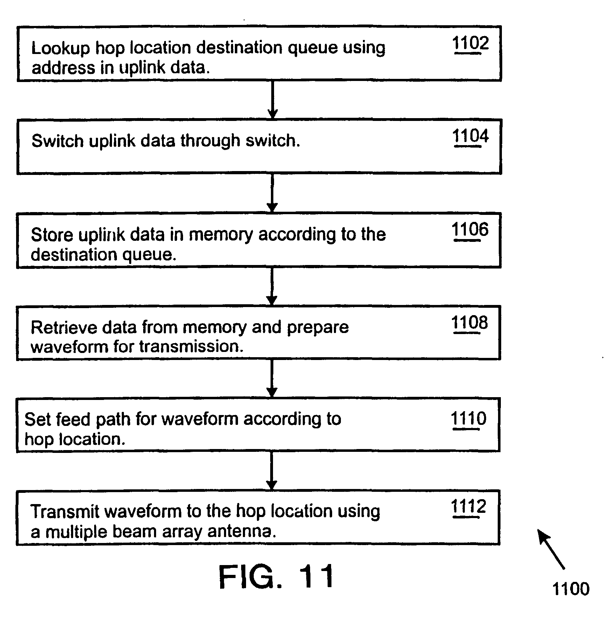

Figure 11 summarizes a method 1100 for routing data through a satellite to a selected downlink hop location. At step 1102, the satellite looks up a hop location destination queue using an address carried in the uplink data. Next, at step 1104, the satellite switches the uplink data through a switch, and stores (step 1106) the data in the appropriate queue.

In building frames for transmission, the satellite, at step 1108, first retrieves data from the queue in order to build the downlink waveform. The satellite then selects a feed path for the waveform according to its destination hop location (step 1110). The waveform is transmitted (step 1112), preferably using a multiple beam array antenna with feed elements assigned to the hop locations.

Returning again to the external cell memory 804, its shared nature allows a queue to grow in size to handle bursts of traffic. In addition, dynamic buffers allow the NCC to accept connections whenever shared memory is available to allow a queue to grow. On the other hand, a fixed partition buffer must be checked to determine if it has any room left for cells generated by the new connection. Bandwidth available in any of the remaining queues (e.g., assigned to any different combination of hop locations, priorities, and code rates) nevertheless denies the connection. The shared memory approach, however, allows the appropriate queue for a given hop location, priority, and code rate to grow in size to handle the connection. Network and queue management functions therefore tend to be less complex and more efficient.

It is also noted that the external cell memory 804 may also include a queue dedicated to controller cells. The downlink scheduling table services the controller cells by placing them in a controller buffer (as opposed to preparing them for transmission in a downlink frame), for example, 32 or 64 cells in size. One or more control elements may then access the controller buffer, decode commands in the cell, and perform those commands. As an example, a controller cell may direct an inbound module to replace entries in the routing table 702.

Thus, the present invention provides a beam hopping self addressed packet switched communication system. In particular, the communication system shares a multiport memory between output ports of a cell switch (and therefore between downlink beams). The multiport shared memory architecture increases throughput by 5% or more, and additionally increases memory utlization itself by 30% or more. Additional increases in memory utilization and throughput may be realized by sharing the multiport memory between additional output ports of the cell switch 608 (and therefore additional hop locations). The extensive set of queues provide storage for cells of many different priorities, hop locations, and coding rates. Cell acceptance algorithms enforce, for example, minimum bandwidth capability for each queue, maximum size constraints for each queue, and the like.

While the invention has been described with reference to a preferred embodiment, those skilled in the art will understand that various changes may be made and equivalents may be substituted without departing from the scope of the invention. In addition, many modifications may be made to adapt a particular step, structure, or material to the teachings of the invention without departing from its scope. Therefore, it is intended that the invention not be limited to the particular embodiment disclosed, but that the invention will include all embodiments falling within the scope of the appended claims.

## Claims

1. A router for a communication satellite, the router comprising:
a multiport shared memory comprising storage for at least two downlink hop location queues;
a packet switch routing self addressed uplink data from an input port to an output port coupled to the multiport shared memory; and
a routing table coupled to the packet switch, the routing table comprising queue tags identifying at least one of the downlink hop location queues.

2. The router of claim 1, wherein the downlink hop location queues are downlink hop location queues distinguished by priority.

3. The router of claim 2, wherein the downlink hop location queues are downlink hop location queues further distinguished by code rate.

4. The router of claim 1, wherein the routing table further comprises routing tags that direct the packet switch to route the uplink data from one of a plurality of input ports to at least one of a plurality of output ports.

5. The router of claim 1, wherein the routing table further comprises replacement addresses for the self addressed uplink data.

6. The router of claim 5, wherein the replacement addresses comprise replacement VPI or VCI bits for ATM cells.

7. The router of claim 1, wherein at least one of the downlink hop location queues is **characterized by** a minimum size.

8. The router of claim 1, wherein at least one of the downlink hop location queues is **characterized by** a data priority threshold that determines when low priority data is discarded.

9. The router of claim 1, wherein at least one of the downlink hop location queues is **characterized by** a maximum size.

10. The router of claim 1, wherein at least one of the downlink hop location queues is a dynamic hop location queue that dynamically changes in size by allocating or deallocating memory from the shared memory.

11. The router of claim 1, further comprising a linked list pointer memory that stores pointers to the location of the uplink data in the shared memory.

12. The router of claim 1, wherein the multiport shared memory further comprises storage for a controller cell queue.

13. The router of claim 1, wherein each queue tag specifies at least one of two hop locations, one of two priorities, and one of two coding rates.

14. The router of claim 13, wherein each queue tag specifies at least one of two hop locations, one of sixteen priorities, and one of two coding rates.

15. A method for routing data in a communication satellite, the method comprising:
looking up a destination downlink hop location queue using an address in self addressed uplink data;
switching the self addressed uplink data through a switch to an output port; and
storing the uplink data in a multiport shared memory coupled to the output port, the shared memory including at least two downlink hop location queues.

16. The method of claim 15, wherein looking up comprises looking up a queue tab in a routing table.

17. The method of claim 15, further comprising looking up a routing tag using the address, and wherein switching comprises switching the uplink data using the routing tag.

18. The method of claim 15, further comprising determining whether to accept or reject the uplink data.

19. The method of claim 18, wherein determining comprises accepting the uplink data when the uplink data comprises controller data and when there is free memory available.

20. The method of claim 18, wherein determining comprises accepting the uplink data when the destination downlink hop location queue is smaller in size than a minimum queue size threshold.

21. The method of claim 18, wherein determining comprises rejecting the uplink data when the destination downlink hop location queue reaches a maximum queue size threshold.

22. The method of claim 18, wherein determining comprises discarding low priority uplink data when the destination downlink hop location queue reaches a data loss priority queue size threshold.

23. The method of claim 18, wherein determining comprises discarding low priority uplink data when a free cell counter is less than a data loss priority queue size threshold.

24. The method of claim 18, wherein determining comprises discarding the uplink data when a free cell counter is less than a maximum queue size threshold.
